# EUROPEAN PATENT SPECIFICATION

(11) **EP 0 309 887 B1**
(45) Date of publication and mention of the grant of the patent: **04.08.1993**
(21) Application number: 88115483.5
(22) Date of filing: 21.09.1988
(51) Int. Cl.: C04B 35/64, C04B 35/00

(54) **Spacer sheet for burning ceramics**
Abstandsschicht für das Brennen von Keramik
Couche d'écartement pour la cuisson de céramique

(30) Priority: 21.09.1987 JP 236670/87
(43) Date of publication of application: 05.04.1989
(73) Proprietor: NITTO DENKO CORPORATION, Osaka (JP)
(72) Inventor: Sakuramoto, Takahumi c/o Nitto Denko Corporation, Ibaraki-shi Osaka (JP); Honda, Makoto c/o Nitto Denko Corporation, Ibaraki-shi Osaka (JP); Matsuura, Hirotaka c/o Nitto Denko Corporation, Ibaraki-shi Osaka (JP); Tominaga, Takashi c/o Nitto Denko Corporation, Ibaraki-shi Osaka (JP)
(74) Representative: Grünecker, Kinkeldey, Stockmair & Schwanhäusser Anwaltssozietät

(56) References cited:
- Derwent Accession No. 87-148 315 Questel Telesystemes (WPIL) Derwent PublicationS Ltd, London

## Description

The present invention relates to a spacer sheet for burning ceramics, which is interposed between ceramic moldings or the like to prevent a reaction occurred therebetween at burning, whereby each of the ceramic moldings can be easily recovered individually.

### BACKGROUND OF THE INVENTION

A paper or plastic having powders of alumina, zirconia, etc. dispersed therein is known as a spacer sheet which prevents a reaction which occurs between ceramic moldings or between the ceramic molding and the burning table at burning and as a result, presents the situation that those are adhered and it is impossible to recover the ceramic moldings individually. The reason for this is that in the embodiment of merely spraying powders of alumina, zirconia or the like, it is difficult to uniformly spray the powders and the adhesion between ceramic moldings or between the ceramic molding and the burning table cannot be sufficiently prevented.

However, the conventional spacer sheets merely using plastics or the like involve disadvantages that cracks or deformation occur in the burned product.

### SUMMARY OF THE INVENTION

As a result of various investigation, it has been found that the problems in the conventional spacer sheets can be overcome by preparing a spacer sheet using a high melting material treated with a specific film-forming material.

Accordingly, an object of the present invention is to provide a spacer sheet for burning ceramics, which can eliminate the disadvantages involved in the conventional spacer sheets.

The spacer sheet for burning ceramics according to the present invention comprises a combustible substrate, a thermal decomposition retarder and a high melting material which does not melt at a temperature at which ceramic burns.

By taking the above structure, at burning of ceramics the polymeric film-forming material mildly decomposes or burns to gasify or incinerate due to the presence of the thermal decomposition retarder, and on the other hand, the high melting material can maintain its form without melting As a result, when ceramics are burned by interposing at the desired position such as between ceramic molding and its burning table, between the arrangement of the ceramic molding or between its piles, occurrence of cracks or deformation in the ceramic moldings can be prevented by decomposition or burning of the polymeric film-forming material, and due to the residual high melting material reaction with the burning table for ceramic moldings or other ceramic molding can be prevented, and the adhesion therebetween can be prevented.

### DETAILED DESCRIPTION OF THE INVENTION

The combustible substrate used in the present invention is a material which decomposes or burns at burning of ceramics to gasify or incinerate, does not modify ceramics and has a film-forming property. Examples of the combustible substrate are rubbers such as natural rubber, butyl rubber, isoprene rubber, styrene-butadiene rubber, styrene-isoprene-styrene block copolymer rubber, styrene-butadiene-styrene block copolymer rubber, etc.; rubber compositions comprising a rubber component, a tackifier such as petroleum resin, terpene resin, rosin resin, xylene resin or coumarone-indene resin, and if necessary, an additive such as softening agent, anti-ageing agent, coloring agent or filler; synthetic polymers such as hydrocarbon resin, vinyl resin, acetal resin, acrylic resin, styrene resin, ester resin or urethane resin; semi-synthetic polymers such as fibrous resin; and the like.

In preparing a rubber composition by adding a tackifier to a rubber component, it is preferred that the amount of the tackifier added is 10 to 300 parts by weight per 100 parts by weight of the rubber component.

The thermal decomposition retarder used in the present invention is compounded with the combustible substrate. The thermal decomposition retarder is a material which decomposes or burns at burning of ceramics to gasify or incinerate, does not modify ceramic and has a thermal decomposition at least 10°C, preferably at least 30°C, higher than that of the combustible substrate. The thermal decomposition retarder acts to prevent rapid decomposition or burning of the combustible substrate by relaxing a thermal decomposition rate of the combustible substrate. The thermal decomposition retarder which makes the decomposition rate of the comustible substrate milder is preferred, because cracks or deformation become difficult to occur in the ceramic molding at burning. Further, a material which does not melt and soften, and decomposes or burns at burning of the ceramics is preferred. Examples of the thermal decomposition retarder which is preferably used in the present invention are powders of thermosetting resins such as epoxy resin, phenol resin, unsaturated polyester resin and xylene resin. The average particle diameter of the powders is preferably 200 µm or less and more preferably 10 to 50 µm.

The amount of the thermal decomposition retarder added is 5 to 900 parts by weight, preferably 40 to 250 parts by weight, per 100 parts by weight of the combustible substrate.

The spacer sheet of the present invention is prepared by combining a high melting material with a polymeric film-forming material.

The high melting material used in the present invention is a material which does not melt at the burning temperature of ceramics. Examples of the high melting material are alumina, zirconia, aluminum nitride, silicon nitride, barium dititan trioxide, and an inorganic material such as high melting metals. The high melting material can be used in various forms, e.g., in the form of powder, fiber, non-woven fabric and woven fabric.

The high melting material is combined with a polymeric film-forming material. The polymeric film-forming material used in the present invention is decomposed and burned slowly at burning of ceramics by the presence of the thermal decomposition retarder contained in the combustible substrate.

The method of combining the high melting material with the polymeric film-forming material is appropriately determined depending upon the form of the high melting material used.

For instance, if the high melting material has only a powder form or fiber form, such a high melting material, the combustible substrate and the thermal decomposition retarder are mixed, and the resulting mixture is subjected to a film-formation treatment. The film-formation treatment is conducted by any optional method such as a method of development cooling a solution obtained by heat melting the combustible material in the above-described mixture or a method of dispersing other component in a solution of the combustible substrate dissolved in a solvent and development drying the solution.

The film-formation treatment may be conducted by development film-forming on a combustible thin material such as plastic film, paper or cloth to prepare a spacer sheet of the present invention as a laminate.

The combustible thin material is useful to reinforce the spacer sheet, thereby improving the handling property thereof. The combustible thin material preferably has a thickness of 100 µm or less. When a plastic film is used as a combustible thin material, a non-stretched product prepared by, for example, a casting method is preferably used. The thermal decomposition retarder may be compounded with the combustible thin material.

If the high melting material in the form of powder is used, the average particle diameter thereof is 300 µm or less and preferably 50 µm or less. If the high melting material in the form of fiber, the length thereof is 10 mm or less and preferably 3 mm or less.

The amount of the high melting material used is 5 to 10,000 parts, preferably 100 to 400 parts, by weight per 100 parts by weight of the polymeric film-forming material.

The thickness of the polymeric film-forming material is 0.01 to 2 mm, preferably 0.05 to 0.5 mm.

On the other hand, if the high melting material in the form of a shaped product such as non-woven fabric or woven fabric is used, the treatment of the high melting material with the polymeric film-forming material is conducted by a dipping method comprising dipping the polymeric film-forming material in a solution or a method comprising coating or laminating the polymeric film-forming material on the high melting material. In addition, a laminate layer of the high melting material may be provided on one side of the high melting material composed of a shaped product and a layer of the combustible thin material may be provided on other side thereof to prepare a sandwich structure which is used as a spacer sheet of the present invention.

As is apparent from the above, the spacer sheet according to the present invention is prepared by molding into a sheet having a structure that a layer of the polymeric film-forming material is positioned on a surface layer portion of at least one side of the sheet, using the polymeric film-forming material as a binder of the high melting material. If desired and necessary, the spacer sheet of the present invention may contain dispersing agent, plasticizer, chip-like fiber which is capable of decomposing or burning, or the like.

The spacer sheet of the present invention is applied, in burning ceramic sheets and the like, interposing between a ceramic molding and its burning table, between ceramic moldings arranged on the burning table, or between the ceramic moldings piled, and is advantageously used in a production step of ceramic-made electronic parts which are in many cases burned in a piled state.

Therefore, for the purpose of preventing deviation of ceramic moldings at piling, it is preferred to provide an adhesive layer exhibiting adhesive properties at room temperature or by activation, on one side or both sides of the spacer sheet.

Burning of ceramic-made electronic parts is generally conducted by heat treating the same at about 500 to 2,000°C for 30 min. to 15 hours under oxidizing or non-oxidizing atmosphere, and it is possible for the spacer sheet of the present invention to appropriately control its properties such as heat resistance depending on the burning conditions.

Since the high melting material is maintained with a polymeric film-forming material, the spacer sheet for burning ceramics according to the present invention has excellent handling property and makes it possible to perform a setting operation efficiently. Further, since the high melting material is uniformly distributed, the spacer sheet makes it possible to effectively prevent adhesion with the burning table for ceramic moldings or with ceramic moldings, thereby smoothly recovering the burned ceramic moldings individually.

The spacer sheet of the present invention has also the advantage that since the thermal decomposition retarder is added to inhibit a rapid thermal decomposition of the polymeric film-forming material, it is effective to prevent occurrence of cracks or deformation in the ceramic moldings at burning and normal ceramic burned product can be obtained in good yield.

The present invention will be now explained in more detail by reference to the following examples, but it should be understood that they are not intended to limit the present invention.

### EXAMPLE

100 parts by weight of a thermal decomposition retarder comprising a phenol resin powder having an average particle size of 30 µm were added to a toluene solution containing 100 parts by weight of a combustible substrate comprising a polyisobutyl methacrylate to prepare a uniform dispersion of a polymeric film-forming material.

To the resulting dispersion was added 150 parts by weight, per 100 parts by weight of the polymeric film-forming material, of alumina powders (average particle diameter: 30 µm), followed by uniformly mixing the mixture. The mixed solution was developed on a table and dried to form a spacer sheet for burning ceramics having a dry thickness of 200 µm.

Each of the resulting spacer sheet and a 96% alumina ceramic green sheet having a thickness of 50 µm was cut into a size of 50 mm x 50 mm. The resulting cut pieces were piled on a burning table in the order of the spacer sheet cut piece and the green sheet cut piece using 19 cut pieces in total. The resulting laminate (piled product) was burned at 1,600°C for 5 hours in an oxidizing gas.

After completion of burning, followed by cooling, when each of ceramic burned products was separated, all of the ceramic burned products could be smoothly separated individually without blocking portions. Further, after separation, any defect such as cracks or deformation was not observed at all in all of the ceramic burned products.

It was observed that powders of alumina were retained between the ceramic burned products and between the ceramic burned product and the burning table.

## Claims

1. A spacer sheet for burning ceramics, comprising a combustible substrate, a thermal decomposition retarder and a high melting material which does not melt at a burning temperature of the ceramics, wherein the thermal decomposition retarder is a material which does not melt and soften, decomposes or burns at the burning of ceramic and has a thermal decomposition temperature of at least 10°C higher than that of the combustible substrate.

2. A spacer sheet as claimed in Claim 1, wherein aid thermal decomposition retarder is a powder of a thermosetting resin.

3. A spacer sheet as claimed in Claim 2, wherein said thermosetting resin is epoxy resin, phenol resin, unsaturated polyester resin or xylene resin.

## Patentansprüche

1. Abstandschicht für das Brennen von Keramik, umfassend ein verbrennbares Substrat, einen Verzögerer der thermischen Zersetzung und ein hochschmelzendes Material, welches nicht bei einer Brenntemperatur der Keramik schmilzt, wobei der Verzögerer der thermischen Zersetzung ein Material ist, welches bei dem Brennen von Keramik nicht schmilzt oder erweicht, sich nicht zersetzt oder verbrennt und eine thermische Zersetzungstemperatur von wenigstens 10 °C oberhalb der des verbrennbaren Substrates aufweist.

2. Abstandschicht nach Anspruch 1, wobei dieser Verzögerer der thermischen Zersetzung ein Pulver aus einem durch Wärme aushärtbaren Harz ist.

3. Abstandschicht nach Anspruch 2, wobei dieser in der Wärme aushärtbare Harz ein Epoxyharz, Phenolharz, ungesättigter Polyesterharz oder Xylolharz ist.

## Revendications

1. Feuille d'espacement destinée à la cuisson de céramiques, comprenant un substrat combustible, un agent retardateur de décomposition thermique et un matériau à température élevée de fusion qui ne fond pas à la température de cuisson des céramiques, dans laquelle l'agent retardateur de décomposition thermique est un matériau qui ne fond pas et ne se ramollit pas, qui se décompose ou brûle lors de la cuisson de la céramique et qui a une température de décomposition thermique supérieure d'au moins 10 °C à celle du substrat combustible.

2. Feuille d'espacement selon la revendication 1, dans laquelle l'agent retardateur de décomposition thermique est une poudre d'une résine thermodurcissable.

3. Feuille d'espacement selon la revendication 2, dans laquelle la résine thermodurcissable est une résine époxyde, une résine phénolique, une résine de polyester insaturée ou une résine de xylène.
